# EUROPÄISCHE PATENTSCHRIFT

(11) **EP 4 108 891 B1**
(45) Veröffentlichungstag und Bekanntmachung des Hinweises auf die Patenterteilung: **21.02.2024**
(21) Anmeldenummer: 22174729.8
(22) Anmeldetag: 23.05.2022
(51) Int. Cl.: F01N 3/20, F01N 13/18, H01R 13/00

(54) **ABGASHEIZANORDNUNG MIT EINER VERBINDUNGSANORDNUNG**
EXHAUST GAS HEATING ARRANGEMENT WITH A CONNECTION ARRANGEMENT
DISPOSITIF DE CHAUFFAGE DE GAZ D'ÉCHAPPEMENT DOTÉ D'UN AGENCEMENT DE RACCORDEMENT

(30) Priorität: 25.06.2021 DE 102021116420
(43) Veröffentlichungstag der Anmeldung: 28.12.2022
(73) Patentinhaber: Purem GmbH, 66539 Neunkirchen (DE)
(72) Erfinder: Brenner, Holger, Stuttgart (DE); Nicolai, Manfred, Esslingen (DE)
(74) Vertreter: Ruttensperger Lachnit Trossin Gomoll

(56) Entgegenhaltungen:
- EP-A1- 0 739 152
- EP-A2- 0 716 558
- WO-A1-98/01653
- DE-A1-102018 222 467

## Beschreibung

Die vorliegende Erfindung betrifft eine Abgasheizanordnung für eine Abgasanlage einer Brennkraftmaschine, umfassend ein von in einem Abgasführungsvolumen strömendem Abgas umströmbares Heizleiterelement, wobei das Heizleiterelement im Bereich wenigstens einer Durchführung durch eine das Abgasführungsvolumen umgrenzende Wandung hindurchgeführt ist und in wenigstens einem Heizleiterelement-Verbindungsendbereich, vorzugsweise in zwei Heizleiterelement-Verbindungsendbereichen, außerhalb des Abgasführungsvolumens vermittels einer Verbindungsanordnung mit einer Anschlussleitung verbunden ist.

In Abgasanlagen von in Kraftfahrzeugen vorgesehenen Brennkraftmaschinen werden Abgasheizer eingesetzt, um insbesondere in einer Startphase des Betriebs einer Brennkraftmaschine bei noch vergleichsweise niedrigen Abgastemperaturen und niedrigen Temperaturen der abgasführenden Komponenten und insbesondere auch von Abgasbehandlungsanordnungen, wie zum Beispiel Katalysatoren oder Partikelfiltern, Wärme auf das diese umströmende Abgas zu übertragen und somit im Abgasstrom weiter stromabwärts liegende Systembereiche, wie zum Beispiel die Abgasbehandlungsanordnungen, schneller auf eine Betriebstemperatur zu bringen. Derartige Abgasheizer werden im Allgemeinen elektrisch betrieben, so dass es erforderlich ist, diese über Anschlussleitungen an die in Fahrzeugen vorgesehenen Spannungsquellen elektrisch anzuschließen.

Der Bereich der Verbindung zwischen einem Heizleiterelement eines derartigen Abgasheizers und der bzw. den damit zu verbindenden Anschlussleitungen ist in einem Fahrzeug äußeren Einflüssen ausgesetzt, welche diesen Bereich stark belasten. Zum einen können Medien, wie zum Beispiel Salzwasser, die in einer SCR-Katalysatoranordnung als Reduktionsmittel beispielsweise eingesetzte Harnstoff/Wasser-Lösung, Motoröl und dergleichen, zu einer Korrosion, zu elektrischen Kurzschlüssen oder Fehlfunktionen führen, insbesondere wenn derartige Flüssigkeiten im Bereich eines offenen Endes einer Anschlussleitung eindringen und so bis zu einem Steuergerät wandern können. Andererseits unterliegt dieser Verbindungsbereich einer starken thermischen Belastung aufgrund der im Betrieb sehr hohen Temperaturen von abgasführenden Komponenten einer Abgasanlage, und unterliegt auch starken mechanischen Belastungen aufgrund der in einem Fahrzeug auftretenden Stöße und Vibrationen.

Aus der EP 0 716 558 A2 ist eine Abgasheizanordnung gemäß dem Oberbegriff des Anspruchs 1 bekannt. Eine Abschirmhülse, welche ein ein Heizleiterelement mit einer elektrischen Anschlussleitung elektrisch leitend verbindendes Verbindungselement umgibt und nach außen abschirmt, ist in einem ihrer Hülsenendabschnitte die elektrische Anschlussleitung umgebend an dieser festgelegt und ist in ihrem anderen Hülsenendabschnitt an einer an einer ein Abgasführungsvolumen umgrenzenden Wandung festgelegten Durchführung diese umgebend festgelegt.

Auch die EP 0 700 3952 A1 offenbart eine Abgasheizanordnung, bei welcher eine Abschirmhülse mit einem Hülsenendabschnitt an einer elektrischen Anschlussleitung und mit ihrem anderen Hülsenendabschnitt an einer ein Heizleiter-Leiterelement aufnehmenden Durchführung festgelegt ist.

Die DE 10 2018 222 476 A1 offenbart die Verbindung zweier jeweils einen Leitungskern aufweisender elektrischer Leitungen durch ein Verbindungselement. Das Verbindungselement und die beiden durch das Verbindungselement miteinander verbundenen, abisolierten Enden der beiden elektrischen Leitungen sind von elektrisch isolierendem und insbesondere den Hindurchtritt von Flüssigkeiten verhinderndem Material umgeben.

Die WO 98/01653 A1 offenbart die Verbindung eines einem Katalysator zugeordneten elektrischen Heizers über ein eine Durchführung durchsetzendes Leiterelement mit einer elektrischen Anschlussleitung.

Es ist die Aufgabe der vorliegenden Erfindung, eine Abgasheizanordnung mit einer Verbindungsanordnung zur elektrischen Verbindung eines Heizleiterelements, insbesondere eines Abgasheizers in einer Abgasanlage einer Brennkraftmaschine, mit einer elektrischen Anschlussleitung vorzusehen, welche bei konstruktiv einfacher Ausführung einen zuverlässigen Schutz für den Bereich der Verbindung eines Heizleiterelements mit einer Anschlussleitung vorsieht.

Erfindungsgemäß wird diese Aufgabe gelöst durch eine Abgasheizanordnung für eine Abgasanlage einer Brennkraftmaschine gemäß Anspruch 1, umfassend ein von in einem Abgasführungsvolumen strömendem Abgas umströmbares Heizleiterelement, wobei das Heizleiterelement im Bereich wenigstens einer Durchführung durch eine das Abgasführungsvolumen umgrenzende Wandung hindurchgeführt ist und in wenigstens einem Heizleiterelement-Verbindungsendbereich, vorzugsweise in zwei Heizleiterelement-Verbindungsendbereichen, außerhalb des Abgasführungsvolumens vermittels einer Verbindungsanordnung mit einer Anschlussleitung verbunden ist.

Das Heizleiterelement weist in einem mit der Anschlussleitung elektrisch verbundenen Heizleiterelement-Verbindungendbereich einen freiliegenden Endabschnitt eines Heizleiterelement-Leiterelements auf und die elektrische Anschlussleitung weist in einem mit dem Heizleiterelement elektrisch verbundenen Anschlussleitung-Verbindungsendbereich einen freiliegenden Endabschnitt eines Anschlussleitung-Leiterelements auf.

Die Verbindungsanordnung umfasst zur elektrischen Verbindung des Heizleiterelements, insbesondere eines Abgasheizers in einer Abgasanlage einer Brennkraftmaschine, mit der elektrischen Anschlussleitung:
- ein mit dem freiliegenden Endabschnitt des Heizleiterelement-Leiterelements und dem freiliegenden Endabschnitt des Anschlussleitung-Leiterelements elektrisch leitend verbundenes Verbindungselement,
- eine den Anschlussleitung-Verbindungsendbereich, den Heizleiterelement-Verbindungsendbereich und das den freiliegenden Endabschnitt des Heizleiterelement-Leiterelements mit dem freiliegenden Endabschnitt des Anschlussleitung-Leiterelements verbindende Verbindungselement umgebende Abschirmhülse, wobei die Abschirmhülse in einem ersten Hülsenendabschnitt mit dem Heizleiterelement im Heizleiterelement-Verbindungsendbereich und in einem zweiten Hülsenendabschnitt mit der Anschlussleitung im Anschlussleitung-Verbindungsendbereich verbunden ist und den freiliegenden Endabschnitt des Heizleiterelement-Leiterelements, den freiliegenden Endabschnitt des Anschlussleitung-Leiterelements und das den freiliegenden Endabschnitt des Heizleiterelement-Leiterelements mit dem freiliegenden Endabschnitt des Anschlussleitung-Leiterelements verbindende Verbindungselement gegen äußere Einflüsse abschirmt.

Für einen dichten und auch mechanisch stabilen Anschluss der Abschirmhülse an das Heizleiterelement ist die Abschirmhülse im ersten Hülsenendabschnitt mit einem das Heizleiterelement-Leiterelement im Heizleiterelement-Verbindungsendbereich umgebenden Mantel des Heizleiterelements durch Materialschluss, vorzugsweise Verlöten oder/und Verschweißen, verbunden.

Bei der in der erfindungsgemäß aufgebauten Abgasheizanordnung eingesetzten Verbindungsanordnung kann durch eine Trennung der Funktionen zum Herstellen einer elektrisch leitenden Verbindung einerseits und zum Abschirmen dieses Bereichs gegen äußere Einflüsse, wie zum Beispiel der Einwirkung von Flüssigkeiten, der thermischen Belastung und der mechanischen Belastung sowie auch der Bereitstellung einer zuverlässigen elektrischen Isolierung, andererseits für jede dieser beiden Funktionen unabhängig von der anderen Funktion ein optimierter Aufbau bereitgestellt werden. Durch das Verbindungselement wird die elektrisch leitende Verbindung realisiert, die durch die Abschirmhülse gegen äußere Einflüsse abgeschirmt ist und insbesondere auch nach außen hin elektrisch isoliert ist. Die Gefahr, dass Flüssigkeit in diesem Verbindungsbereich eindringt und zu einer Schädigung bzw. zu Betriebsstörungen führen kann, ist ebenso ausgeschlossen, wie die Gefahr, dass die in einem Fahrzeug auftretenden thermischen oder/und mechanischen Belastungen zu einer Beschädigung der Verbindung bzw. einer Leitungsunterbrechung führen können.

Es ist darauf hinzuweisen, dass im Sinne der vorliegenden Erfindung ein freiliegender Endabschnitt eines grundsätzlich elektrisch leitenden Elements, wie zum Beispiel des Heizleiterelement-Leiterelements bzw. des Anschlussleitung-Leiterelements, ein elektrisch nicht isolierter und somit zur Bereitstellung einer elektrischen Verbindung mit einer anderen Komponente freiliegender Endabschnitt ist.

Für eine stabile Verbindung mit dem Verbindungselement kann das Heizleiterelement-Leiterelement wenigstens in seinem freiliegenden Endabschnitt als ein massiv ausgebildeter Leiterkörper, beispielsweise Draht, bereitgestellt sein.

Um die Anschlussleitung flexibel auszugestalten, wird vorgeschlagen, dass das Anschlussleitung-Leiterelement wenigstens in seinem freiliegenden Endabschnitt mit einer Mehrzahl von Einzeldrähten bereitgestellt ist.

Zur elektrischen Verbindung mit dem Heizleiterelement bzw. der Anschlussleitung kann das Verbindungselement eine den freiliegenden Endabschnitt des Heizleiterelement-Leiterelements aufnehmende Heizleiterelement-Aufnahmeöffnung oder/und eine den freiliegenden Endabschnitt des Anschlussleitung-Leiterelements aufnehmende Anschlussleitung-Aufnahmeöffnung aufweisen.

Für eine stabile, gleichwohl jedoch eine zuverlässige elektrische Verbindung realisierende Ausgestaltung kann der freiliegende Endabschnitt des Anschlussleitung-Leiterelements in der Anschlussleitung-Aufnahmeöffnung durch durch Umformen des Verbindungselements im Bereich der Anschlussleitung-Aufnahmeöffnung erzeugten Kraftschluss oder/und Formschluss fest gehalten sein. Alternativ oder zusätzlich kann der freiliegende Endabschnitt des Anschlussleitung-Leiterelements in der Anschlussleitung-Aufnahmeöffnung durch Materialschluss, vorzugsweise Verlöten, fest gehalten sein.

Die stabile und zuverlässige elektrische Verbindung kann weiter dadurch unterstützt werden, dass der freiliegende Endabschnitt des Heizleiterelement-Leiterelements in der Heizleiterelement-Aufnahmeöffnung durch durch Einpressen des freiliegenden Endabschnitts des Heizleiterelement-Leiterelements in die Heizleiterelement-Aufnahmeöffnung erzeugten Kraftschluss oder/und durch durch Umformen des Verbindungselements im Bereich der Heizleiterelement-Aufnahmeöffnung erzeugten Kraftschluss oder/und Formschluss fest gehalten ist, oder/und dass der freiliegende Endabschnitt des Heizleiterelement-Leiterelements in der Heizleiterelement-Aufnahmeöffnung durch Materialschluss, vorzugsweise Verlöten, fest gehalten ist.

Um das Einpressen des freiliegenden Endabschnitts des Heizleiterelement-Leiterelements in das Verbindungselement zu erleichtern, kann das Verbindungselement wenigstens im Bereich der Heizleiterelement-Aufnahmeöffnung geschlitzt ausgebildet sein.

Für eine definierte Positionierung der elektrisch miteinander zu verbindenden Leiterelemente in dem Verbindungselement wird vorgeschlagen, dass das Verbindungselement rohrartig ausgebildet ist und zwei voneinander durch einen vorzugsweise durch Umformen des Verbindungselements gebildeten Einschiebeanschlag getrennte Leiterelement-Aufnahmeabschnitte aufweist, wobei einer der Leiterelement-Aufnahmeabschnitte die Heizleiterelement-Aufnahmeöffnung bereitstellt und der andere der Leiterelement-Aufnahmeabschnitte die Anschlussleitung-Aufnahmeöffnung bereitstellt.

Für einen mechanisch stabilen und auch gegen das Eindringen von Flüssigkeiten oder Verunreinigungen dichten Anschluss an eine im Allgemeinen flexibel ausgebildetes Anschlussleitung kann im zweiten Hülsenendabschnitt der Abschirmhülse wenigstens ein die Anschlussleitung umgebendes und von der Abschirmhülse umgebenes Dichtungselement vorgesehen sein.

Bei Einsatz eines derartigen Dichtungselements wird vorgeschlagen, dass das wenigstens eine Dichtungselement durch Umformen der Abschirmhülse im zweiten Hülsenendabschnitt zwischen der Abschirmhülse und der Anschlussleitung gepresst gehalten ist, oder/und dass das wenigstens eine Dichtungselement ringartig ausgebildet ist, oder/und dass das wenigstens eine Dichtungselement mit elastischem Material, vorzugsweise Gummimaterial, aufgebaut ist.

Die Erfindung betrifft weiter eine Abgasanlage für eine Brennkraftmaschine, beispielsweise in einem Fahrzeug, mit einer erfindungsgemäß aufgebauten Abgasheizanordnung.

Die vorliegende Erfindung wird nachfolgend mit Bezug auf die beiliegenden Figuren detailliert beschrieben. Es zeigt:
- Fig. 1: in prinzipartiger Darstellung eine Verbindungsanordnung zur elektrischen Verbindung eines Heizleiterelements mit einer Anschlussleitung in einer Abgasanlage einer Brennkraftmaschine;
- Fig. 2: eine Längsschnittdarstellung einer Ausgestaltungsform der in Fig. 1 prinzipartig dargestellten Verbindungsanordnung;
- Fig. 3: eine der Fig. 2 entsprechende Darstellung einer alternativen Ausgestaltungsart einer Verbindungsanordnung.

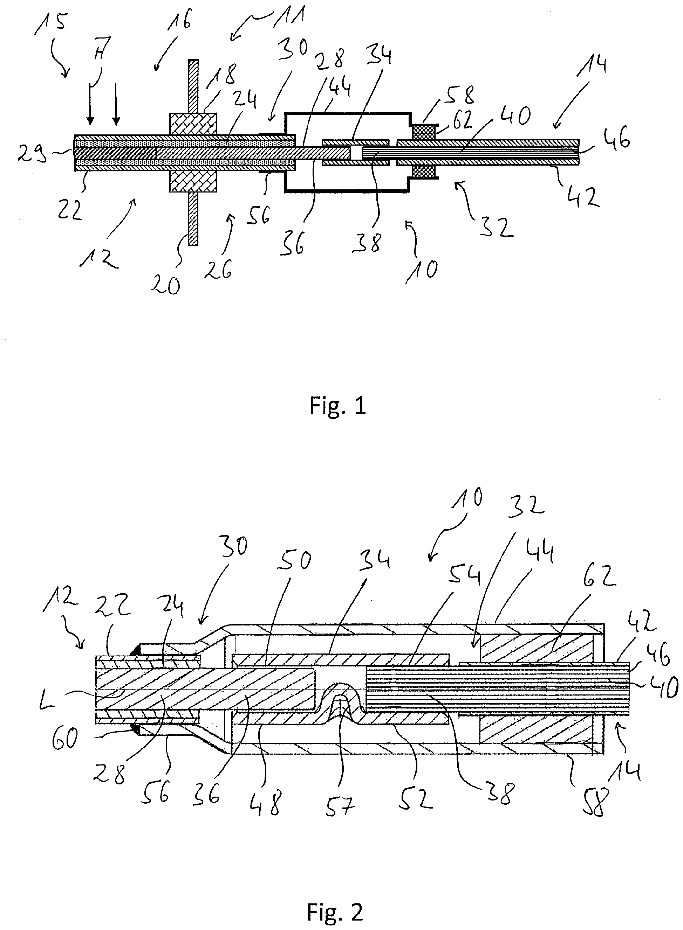

In Fig. 1 ist in prinzipartiger Darstellung eine Verbindungsanordnung 10 gezeigt, die in einer allgemein mit 11 bezeichneten Abgasanlage einer Brennkraftmaschine dazu dient, eine elektrisch leitende und mechanisch stabile Verbindung zwischen einem Heizleiterelement 12 und einer das Heizleiterelement 12 mit einer Spannungsquelle, beispielsweise einer Batterie oder einem Bordspannungssystem in einem Fahrzeug, verbindenden Anschlussleitung 14 herzustellen.

Das Heizleiterelement 12 ist wesentlicher Bestandteil eines in einem von Abgas A durchströmten Abgasströmungsvolumen 16 angeordneten Abgasheizers 15, durch welchen erforderlichenfalls Wärme auf das diesen umströmende Abgas A übertragen werden kann.

Das in Fig. 1 nur beispielhaft dargestellte Heizleiterelement 12 ist im Bereich einer Durchführung 18 durch eine das Abgasführungsvolumen 16 umgrenzende Wandung 20 einer Abgasführungskomponente, beispielsweise eines Abgasrohrs oder dergleichen, hindurchgeführt. Zumindest in dem durch die Wandung 20 vermittels der Durchführung 18 hindurchgeführten Bereich weist das Heizleiterelement 12 einen beispielsweise aus Edelstahl oder sonstigem Metallmaterial aufgebauten Mantel 22 auf. Im Inneren des Mantels 22 ist unter Zwischenlagerung von elektrisch isolierendem Material 24, wie z. B. verpresstem Keramikpulver oder dergleichen, in dem durch die Wandung hindurchgeführten und im Allgemeinen auch als Kaltende 26 bezeichneten Bereich des Heizleiterelements 12 ein vorteilhafterweise als ein einziger massiver Leiterkörper, beispielsweise Draht, ausgebildetes Heizleiterelement-Leiterelement 28 des Heizleiterelements 12 vorgesehen. Im Inneren der Abgasführungskomponente bzw. im Abgasströmungsvolumen 16 schließt an das Heizleiterelement-Leiterelement 28 der bei Anlegen einer elektrischen Spannung und dabei fließendem elektrischen Strom sich erwärmende Heizleiter 29 des Heizleiterelements 12 an. Der Heizleiter 29 kann in seinem gesamten im Abgasströmungsvolumen 16 sich erstreckenden Längenbereich von dem elektrisch isolierenden Material 24 bzw. dem Mantel 22 umgeben sein. Bei einer alternativen Ausgestaltung könnte der Heizleiter 29 in seinem wesentlichen Erstreckungsbereich im Abgasströmungsvolumen 16 freiliegend, also nicht vom Mantel 22 und nicht vom isolierenden Material 24 umgeben sein, um dadurch die thermische Wechselwirkung mit dem Abgas A zu verbessern. Der Mantel 22 bzw. das elektrisch isolierende Material 24 könnte also auf den Längenbereich des Heizleiterelements 12 beschränkt sein, in welchem dieses mit seinem Kaltende 26 durch die Wandung 20 hindurchgeführt ist.

In seinem außerhalb des Abgasströmungsvolumens 16 liegenden Heizleiterelement-Verbindungsbereich 30 ist das Heizleiterelement 12 vermittels der Verbindungsanordnung 10 mit einem Anschlussleitung-Verbindungsbereich 32 der Anschlussleitung 14 elektrisch leitend und mechanisch verbunden. Die elektrisch leitende Verbindung ist realisiert durch ein beispielsweise rohrartiges oder hülsenartiges Verbindungselement 34, welches einen freiliegenden, also nicht elektrisch isolierten Endabschnitt 36 des Heizleiterelement-Leiterelements 28 mit einem freiliegenden, somit also gleichermaßen nicht elektrisch isolierten Endabschnitt 38 eines Anschlussleitung-Leiterelements 40 verbindet.

Obgleich auch über das Verbindungselement 34 eine gewisse mechanische Verbindung zwischen dem Heizleiterelement 12 und der Anschlussleitung 14 bereitgestellt ist, wird die die wesentlichen Lasten im Betrieb aufnehmende mechanische Verbindung zwischen dem Heizleiterelement 12 und der Anschlussleitung 14 durch eine sowohl mit dem Mantel 22 des Heizleiterelements 12, als auch einem Mantel 42 der Anschlussleitung 14 in nachfolgend beschriebener Art und Weise fest verbundene Abschirmhülse 44 bereitgestellt. Diese Abschirmhülse 44 stellt nicht nur eine stabile mechanische Verbindung zwischen dem Heizleiterelement 12 und der Anschlussleitung 14 bereit, sondern stellt für den Bereich, in welchem im Bereich des Heizleiterelement-Verbindungsendbereichs 30 und des Anschlussleitung-Verbindungsendbereichs 32 die elektrisch leitende Verbindung realisiert ist, auch eine Abschirmung dieser elektrisch leitenden Verbindung bzw. der dafür vorgesehenen Systembereiche bereit. Die Abschirmhülse verhindert, dass Flüssigkeiten, wie z. B. Wasser bzw. Salzwasser, eine Harnstoff/Wasser-Lösung, Motoröl oder dergleichen, in den Bereich der freiliegenden Endbereiche 36, 38 gelangen, und verhindert auch, dass Verunreinigungen diesen Bereich erreichen können. Es besteht somit keine Möglichkeit, dass Wasser im Bereich des offenen Endes der Anschlussleitung 14 in diese eindringt und durch die Anschlussleitung 14 hindurch bis zu einem Steuergerät wandern kann und dort zu Beschädigungen oder Fehlfunktionen führen kann. Gleichzeitig stellt die Abschirmhülse 44 eine elektrische Isolierung nach außen hin dar, und verhindert somit auch das Entstehen von Kurzschlüssen. Ferner ist der Bereich der elektrischen Verbindung thermisch abgeschirmt, insbesondere auch durch die durch das das Kaltende 26 bereitstellende Heizleiterelement-Leiterelement 28 bereitgestellte thermische Abschirmung. Dies ist darauf zurückzuführen, dass bei Anlegen einer elektrischen Spannung und durch das Heizleiterelement 12 fließendem elektrischen Strom das durch die Wandung 20 hindurchgeführte Heizleiterelement-Leiterelement 28 sich selbst nur geringfügig erwärmt.

Die Fig. 2 zeigt detaillierter eine Ausgestaltungsform einer derartigen Verbindungsanordnung 10. Zu erkennen sind in Fig. 2 die freiliegenden Endbereiche 36, 38 des Heizleiterelement-Leiterelements 28 und des Anschlussleitung-Leiterelements 40. Da die Anschlussleitung 14 im Allgemeinen flexibel ausgestaltet ist, um diese in geeigneter Weise durch ein Fahrzeug hindurchführen zu können, ist das Anschlussleitung-Leiterelement 40 vorzugsweise mit einer Vielzahl von einzelnen Adern bzw. Drähten 46 ausgebildet.

Das Verbindungselement 34 ist aus elektrisch gut leitendem Metallmaterial aufgebaut und weist eine grundsätzlich rohrartige Struktur auf. Das Verbindungselement 34 stellt in einem in Fig. 2 links dargestellten Leiterelement-Aufnahmeabschnitt 48 eine sich im Wesentlichen über diesen gesamten Leiterelement-Aufnahmeabschnitt 48 erstreckende Heizleiterelement-Aufnahmeöffnung 50 bereit, und stellt in einem in Fig. 2 rechts erkennbaren Leiterelement-Aufnahmeabschnitt 52 eine im Wesentlichen über dessen gesamte Länge sich erstreckende Anschlussleitung-Aufnahmeöffnung 54 bereit. In einem in Längsrichtung des Verbindungselements 34 zentralen Bereich ist beispielsweise durch eine Einformung ein Einschiebeanschlag 57 gebildet, welcher die maximale Eindringtiefe des Heizleiterelement-Leiterelements 28 bzw. des Anschlussleitung-Leiterelements 40 vorgibt.

Zum Herstellen der elektrischen Verbindung vermittels des Verbindungselements 34 kann dieses mit seinem Leiterelement-Aufnahmeabschnitt 48 über den freiliegenden Endabschnitt 36 des Heizleiterelement-Leiterelements 28 geschoben werden. Dabei kann beispielsweise vorgesehen sein, dass für einen guten elektrischen Kontakt das Heizleiterelement-Leiterelement 28 in die Heizleiterelement-Aufnahmeöffnung 50 eingepresst wird. Um Fertigungstoleranzen ausgleichen zu können, kann das Verbindungselement 34 zumindest in seinem Leiterelement-Aufnahmeabschnitt 48 geschlitzt ausgebildet sein. Beispielsweise kann das Verbindungselement 34 in diesem Leiterelement-Aufnahmeabschnitt 48 mit einem in dessen Längsrichtung sich erstreckenden und zu seinem freien Ende offenen Schlitz ausgebildet sein.

Wird das Heizleiterelement-Leiterelement 28 mit seinem Endabschnitt 36 in das Verbindungselement 34 eingepresst, kann allein aufgrund des dabei erzeugten Kraftschlusses eine zuverlässige elektrische Kontaktierung zwischen dem Heizleiterelement-Leiterelement 28 und dem Verbindungselement 34 realisiert werden. Alternativ oder zusätzlich zu dem Einpressen des Heizleiterelement-Leiterelements 28 in das Verbindungselement 34, kann eine zuverlässige elektrische Kontaktierung auch dadurch erreicht werden, dass nach dem Einführen, ggf. dem Einpressen, des Heizleiterelement-Leiterelements 28 in das Verbindungselement 34 dieses im Bereich des Leiterelement-Aufnahmeabschnitts 48 zusammengepresst wird, beispielsweise in einem Crimp-Vorgang, so dass bei dieser Umformung des Verbindungselements 34 durch Kraftschluss und bei entsprechend starker Umformung auch durch Formschluss ein zuverlässiger elektrischer Kontakt zwischen dem Heizleiterelement-Leiterelement 28 und dem Verbindungselement 34 erzeugt wird.

Der elektrische Kontakt zwischen dem Heizleiterelement-Leiterelement 28 und dem Verbindungselement 34 kann alternativ oder zusätzlich auch dadurch zuverlässig gestaltet werden, dass diese beiden Komponenten durch Materialschluss, insbesondere durch Verlöten, miteinander verbunden werden. Hierzu kann das Heizleiterelement-Leiterelement in seinem freiliegenden und in der Heizleiterelement-Aufnahmeöffnung 50 aufzunehmenden Endabschnitt 36 mit Lötmaterial umgeben werden. Nachfolgend wird der Endabschnitt 36 in den Leiterelement-Aufnahmeabschnitt 48 eingeführt, beispielsweise eingepresst. Daraufhin wird das Lötmaterial aufgeschmolzen und somit die auch eine mechanische Verbindung zwischen dem Verbindungselement 34 und dem Endabschnitt 36 herstellende Lötverbindung erzeugt.

Auch die zuverlässige elektrische Verbindung zwischen dem Verbindungselement 34 und dem Endabschnitt 38 des Anschlussleitung-Leiterelements 40 kann durch Materialschluss oder/und Formschluss oder/und Kraftschluss erzeugt werden. Zur Bereitstellung eines Materialschlusses kann im Endabschnitt 38 beispielsweise nachdem die dort aus dem Mantel 42 hervorstehenden Adern bzw. Drähte 46 kompaktiert worden sind, Lötmaterial auf den Endabschnitt 38 aufgebracht werden.

Der Endabschnitt 38 kann dann in den Leiterelement-Aufnahmeabschnitt 52 eingeführt werden, bis er am Einschiebeanschlag 57 ansteht. Durch Erwärmung kann das Lötmaterial aufgeschmolzen werden und damit die elektrisch leitende Verbindung erzeugt werden.

Alternativ oder zusätzlich zu dieser elektrisch leitenden Verbindung kann nach dem Einführen des ggf. mit Lötmaterial umgebenen Endabschnitts 38 das Verbindungselement 34 in seinem Leiterelement-Aufnahmeabschnitt 52 beispielsweise in einem Crimp-Vorgang zusammengepresst werden, so dass durch das Zusammenpressen einerseits ein Kraftschluss und andererseits auch ein Formschluss zwischen dem Verbindungselement 34 und dem Endabschnitt 38 des Anschlussleitung-Leiterelements 40 erzeugt wird.

Nachdem die beiden Leiterelemente 28, 40 durch das Verbindungselement 34 elektrisch leitend miteinander verbunden worden sind, wird die Abschirmhülse 44 über diesen Bereich der Verbindung des Heizleiterelements 12 mit der Anschlussleitung 14 geschoben. Hierzu kann beispielsweise bereits vor dem Verbinden der Anschlussleitung 14 mit dem Verbindungselement 34 die Abschirmhülse 44 über die Anschlussleitung 14 geschoben werden, so dass die Abschirmhülse 44 nachfolgend durch Schieben entlang der Anschlussleitung 14 so positioniert werden kann, dass ein erster Hülsenendabschnitt 56 das Heizleiterelement 12 bzw. den Mantel 22 im Heizleiterelement-Verbindungsbereich 30 umgibt und ein zweiter Hülsenendabschnitt 58 die Anschlussleitung 14 bzw. den Mantel 42 im Anschlussleitung-Verbindungsbereich 32 umgibt.

Die vorzugsweise mit Metallmaterial aufgebaute Abschirmhülse 44 wird dann mit dem Heizleiterelement 12 bzw. dem Mantel 22 durch Materialschluss verbunden. Hierzu kann beispielsweise vor dem Anordnen der Abschirmhülse 44 in der in Fig. 2 dargestellten Positionierung der Mantel 22 in seinem nachfolgend von dem ersten Hülsenendabschnitt 56 übergriffenen Längenbereich mit Lötmaterial überzogen werden. Nach dem Aufschieben der Abschirmhülse 44 mit ihrem ersten Hülsenendabschnitt 56 auf den in Umfangsrichtung vorzugsweise vollständig mit Lötmaterial überzogenen Bereich des Mantels 22 kann durch Erwärmen dieses Lötmaterial aufgeschmolzen werden und somit eine mechanisch stabile und das Eindringen von Verunreinigungen oder Flüssigkeiten verhindernde Verbindung zwischen dem Heizleiterelement 12 und der Abschirmhülse 44 hergestellt werden.

Bei einer alternativen oder erforderlichenfalls zusätzlich vorzusehenden materialschlüssigen Verbindung kann beispielsweise durch Laserschweißen eine um den Mantel 22 vorzugsweise vollständig umlaufende Schweißnaht 60 gebildet werden, welche den ersten Hülsenendabschnitt 56 im Bereich einer Stirnseite desselben an die Außenumfangsfläche des Mantels 22 anbindet.

Im zweiten Hülsenendabschnitt 48 wird zwischen diesem und dem Anschlussleitung-Verbindungsbereich 32 bzw. dem Mantel 42 der Anschlussleitung 14 ein ringartiges, elastisch verformbares, beispielsweise mit Gummimaterial oder gummiartigem Material aufgebautes Dichtungselement 62 positioniert. Auch dieses kann vor der Herstellung der elektrischen Anbindung der Anschlussleitung 14 bereits auf diese geschoben werden, so dass es nachfolgend lediglich entlang des Mantels 42 verschoben werden muss, um in der in Fig. 2 dargestellten Positionierung angeordnet werden zu können, in welcher es die Anschlussleitung 14 im Anschlussleitung-Verbindungsbereich 32 außen umgibt und an seiner Außenseite vom zweiten Hülsenendabschnitt 58 der Abschirmhülse 44 umgeben ist. Nachfolgend kann durch Umformung der Abschirmhülse 44 im zweiten Hülsenendabschnitt 58 nach radial innen, radial bezogen auf eine Längs-Mittenachse L der Abschirmhülse 44, das Dichtungselement 62 radial komprimiert werden. Dabei wird durch Abstützung am zweiten Hülsenendabschnitt 58 nach radial außen das Dichtungselement 62 derart stark nach radial innen gegen die Außenumfangsfläche des Mantels 42 gepresst, das ein einerseits gegen das Eindringen von Verunreinigungen und Flüssigkeiten dichter und andererseits mechanisch stabiler Zusammenhalt zwischen der Abschirmhülse 44 und der Anschlussleitung 14 erzeugt wird.

In der vorangehend beschriebenen Art und Weise kann nach dem Integrieren des Abgasheizers 15 in das Abgasströmungsvolumen 16 und dem Hindurchführen des Heizleiterelements 12 durch die Wandung 20 das Heizleiterelement 12 mechanisch stabil und zuverlässig elektrisch leitend mit der Anschlussleitung 14 verbunden werden. Dabei kann die Dimensionierung der Verbindungsanordnung 10 einerseits an die baulichen Gegebenheiten in einem Fahrzeug, andererseits die zu führenden elektrischen Ströme angepasst werden, so dass insbesondere auch der Einsatz bei Hochvoltanwendungen möglich ist. Da die elektrisch leitenden bzw. stromführenden Komponenten durch die Abschirmhülse 44 in ihren miteinander verbundenen Bereichen nach außen abgeschirmt sind, ist auch ein hohes Maß an Sicherheit gewährleistet. Die Anbindung der Abschirmhülse 44 an das Heizleiterelement 12 einerseits und die Anschlussleitung 14 andererseits erfolgt jeweils derart, dass unter Berücksichtigung der jeweils eingesetzten Aufbaumaterialien eine sehr stabile und zuverlässige Verbindung erzeugt wird. Im Bereich des Heizleiterelements 12 kann dieser Anschluss durch Materialschluss realisiert werden, da sowohl der Mantel 22, als auch die Abschirmhülse 44 vorzugsweise mit Metallmaterial aufgebaut sind. Im Bereich der Anschlussleitung 14, deren Mantel 42 im Allgemeinen aus Kunststoffmaterial aufgebaut ist und ebenso wie die im Inneren des Mantels 42 verlaufenden Adern bzw. Drähte 46 flexibel ist, wird durch den Einsatz des elastisch verformbaren und gegen den Mantel 42 gepressten Dichtungselements 62 ein dauerhaft gegen das Eindringen von Verunreinigungen und Flüssigkeiten und insbesondere auch luftdichter Abschluss erreicht, welcher gleichzeitig den Ausgleich von Bauteiltoleranzen bzw. thermische Ausdehnungen ermöglicht. Da bereits durch die Abschirmhülse 44 eine stabile mechanische Verbindung des Heizleiterelements 12 mit der Anschlussleitung 14 gewährleistet ist, kann die durch das Verbindungselement 34 bereitgestellte elektrische Verbindung, obgleich diese auch eine gewisse mechanische Last aufnehmen kann, hinsichtlich der elektrischen Leitung optimiert ausgebildet werden.

Es ist weiter darauf hinzuweisen, dass zum Anschluss an die beiden elektrischen Pole einer Spannungsquelle bzw. eine Spannungsversorgungssystems das Heizleiterelement 12 in seinen beiden Endbereichen in der vorangehend beschriebenen und den Figuren dargestellten Art und Weise an eine jeweilige Anschlussleitung 14 angeschlossen werden kann.

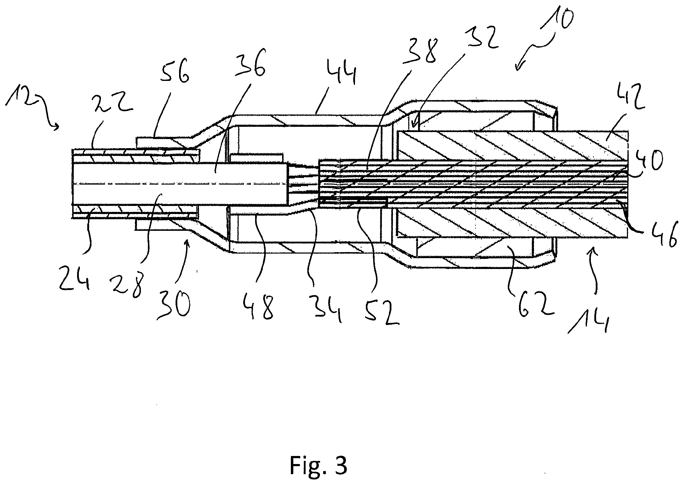

Eine alternative Ausgestaltungsform einer derartigen Verbindungsanordnung 10 ist in Fig. 3 dargestellt. Diese entspricht in wesentlichen Aspekten der vorangehend mit Bezug auf die Fig. 2 beschriebenen Ausgestaltungsform, so dass nachfolgend lediglich auf die zur Ausgestaltungsform der Fig. 2 bestehenden Unterschiede eingegangen wird. Diese Unterschiede liegen insbesondere in der Ausgestaltung des Verbindungselements 44. Dieses ist in seinem mit dem Heizleiterelement-Leiterelement 28 zu verbindenden Leiterelement-Aufnahmeabschnitt 48 so geformt, dass es den Endabschnitt 36 nur über einen Teil von dessen Umfang umgreift. Der den Endabschnitt 36 teilweise umgreifende Bereich des beispielsweise als Blechumformteil bereitgestellten Verbindungselements 34 stellt somit die im Leiterelement-Aufnahmeabschnitt 48 gebildete Heizleiterelement-Aufnahmeöffnung 50 bereit, welche bei dieser Ausgestaltung in einem Umfangsbereich des Leiterelement-Aufnahmeabschnitts 48 offen ist. Beispielsweise kann der Leiterelement-Aufnahmeabschnitt 48 den Endabschnitt 36 im Bereich von etwa 50 bis 75% seines Umfangs umgreifen. Die Festlegung des Endabschnitts 36 am Leiterelement-Aufnahmeabschnitt 48 bzw. am Verbindungselement 34 kann so wie vorangehend mit Bezug auf die Fig. 2 beschrieben durch Materialschluss oder/und Formschluss oder/und Kraftschluss erfolgen.

Im Bereich seines Leiterelement-Aufnahmeabschnitts 52 kann das in Fig. 3 dargestellte Verbindungselement 34 so geformt sein, dass es mit einer im Wesentlichen M-artigen oder W-artigen Umfangskontur den Endabschnitt 38 des Anschlussleitung-Leiterelements 40 in entgegengesetzten Umfangsrichtungen umgreift und auf diese Art und Weise die Anschlussleitung-Aufnahmeöffnung 54 im Leiterelement-Aufnahmeabschnitt 52 bereitstellt. Durch Zusammenquetschen der M-artigen oder W-artigen Struktur kann das Verbindungselement 34 in seinem den Endabschnitt 38 aufnehmenden Bereich, also im Bereich der Anschlussleitung-Aufnahmeöffnung 54, gegen den Endabschnitt 38 bzw. die diesen bereitstellenden Adern bzw. Drähte 46 gepresst werden. Der Zusammenhalt wird dabei im Wesentlichen durch einen Kraftschluss erzeugt, kann jedoch auch unterstützt sein durch einen Materialschluss, der durch vorheriges Umgeben des Endabschnitts 38 mit Lötmaterial und Aufschmelzen des Lötmaterials nach erfolgter Umformung des Verbindungselements 34 erzeugt werden kann.

## Patentansprüche

1. Abgasheizanordnung für eine Abgasanlage einer Brennkraftmaschine, umfassend ein von in einem Abgasführungsvolumen (16) strömendem Abgas (A) umströmbares Heizleiterelement (12), wobei das Heizleiterelement (12) im Bereich wenigstens einer Durchführung (18) durch eine das Abgasführungsvolumen (16) umgrenzende Wandung (20) hindurchgeführt ist und in wenigstens einem Heizleiterelement-Verbindungsendbereich (30) außerhalb des Abgasführungsvolumens (16) vermittels einer Verbindungsanordnung (10) mit einer elektrischen Anschlussleitung (14) verbunden ist, wobei das Heizleiterelement (12) in einem mit der elektrischen Anschlussleitung (14) elektrisch verbundenen Heizleiterelement-Verbindungsendbereich (30) einen freiliegenden Endabschnitt (36) eines Heizleiterelement-Leiterelements (28) aufweist und die elektrische Anschlussleitung (14) in einem mit dem Heizleiterelement (12) elektrisch verbundenen Anschlussleitung-Verbindungsendbereich (32) einen freiliegenden Endabschnitt (38) eines Anschlussleitung-Leiterelements (40) aufweist, wobei die Verbindungsanordnung zur elektrischen Verbindung des Heizleiterelements (12) mit der elektrischen Anschlussleitung (14) umfasst:
- ein mit dem freiliegenden Endabschnitt (36) des Heizleiterelement-Leiterelements (28) und dem freiliegenden Endabschnitt (38) des Anschlussleitung-Leiterelements (40) elektrisch leitend verbundenes Verbindungselement (34),
- eine den Anschlussleitung-Verbindungsendbereich (32), den Heizleiterelement-Verbindungsendbereich (30) und das den freiliegenden Endabschnitt (36) des Heizleiterelement-Leiterelements (28) mit dem freiliegenden Endabschnitt (38) des Anschlussleitung-Leiterelements (40) verbindende Verbindungselement (34) umgebende Abschirmhülse (44), wobei die Abschirmhülse (44) in einem ersten Hülsenendabschnitt (56) mit dem Heizleiterelement (12) im Heizleiterelement-Verbindungsendbereich (30) und in einem zweiten Hülsenendabschnitt (58) mit der Anschlussleitung (14) im Anschlussleitung-Verbindungsendbereich (32) verbunden ist und den freiliegenden Endabschnitt (36) des Heizleiterelement-Leiterelements (28), den freiliegenden Endabschnitt (38) des Anschlussleitung-Leiterelements (40) und das den freiliegenden Endabschnitt (36) des Heizleiterelement-Leiterelements (28) mit dem freiliegenden Endabschnitt (36) des Anschlussleitung-Leiterelements (40) verbindende Verbindungselement (34) gegen äußere Einflüsse abschirmt,
**dadurch gekennzeichnet, dass** das Heizleiterelement (12) zumindest in seinem vermittels der Durchführung (18) durch die Wandung (20) hindurch geführten Bereich einen aus Metallmaterial aufgebauten Mantel (22) aufweist, dass in dem vermittels der Durchführung (18) durch die Wandung (20) hindurchgeführten Bereich des Heizleiterelements (12) das Heizleiterelement-Leiterelement (28) unter Zwischenlagerung von elektrisch isolierendem Material (24) in dem Mantel (22) vorgesehen ist, und dass die Abschirmhülse (44) im ersten Hülsenendabschnitt (56) mit dem das Heizleiterelement-Leiterelement (28) im Heizleiterelement-Verbindungsendbereich (30) umgebenden Mantel (22) des Heizleiterelements (12) durch Materialschluss verbunden ist.

2. Abgasheizanordnung nach Anspruch 1, **dadurch gekennzeichnet, dass** das Heizleiterelement-Leiterelement (28) wenigstens in seinem freiliegenden Endabschnitt (36) als ein massiv ausgebildeter Leiterkörper bereitgestellt ist.

3. Abgasheizanordnung nach Anspruch 1 oder 2, **dadurch gekennzeichnet, dass** das Anschlussleitung-Leiterelement (40) wenigstens in seinem freiliegenden Endabschnitt (38) mit einer Mehrzahl von Einzeldrähten (46) bereitgestellt ist.

4. Abgasheizanordnung nach Anspruch 1, 2 oder 3, **dadurch gekennzeichnet, dass** das Verbindungselement (34) eine den freiliegenden Endabschnitt (36) des Heizleiterelement-Leiterelements (28) aufnehmende Heizleiterelement-Aufnahmeöffnung (50) oder/und eine den freiliegenden Endabschnitt (38) des Anschlussleitung-Leiterelements (40) aufnehmende Anschlussleitung-Aufnahmeöffnung (54) aufweist.

5. Abgasheizanordnung nach Anspruch 4, **dadurch gekennzeichnet, dass** der freiliegende Endabschnitt (38) des Anschlussleitung-Leiterelements (40) in der Anschlussleitung-Aufnahmeöffnung (54) durch durch Umformen des Verbindungselements (36) im Bereich der Anschlussleitung-Aufnahmeöffnung (54) erzeugten Kraftschluss oder/und Formschluss fest gehalten ist.

6. Abgasheizanordnung nach Anspruch 4 oder 5, **dadurch gekennzeichnet, dass** der freiliegende Endabschnitt (38) des Anschlussleitung-Leiterelements (40) in der Anschlussleitung-Aufnahmeöffnung (54) durch Materialschluss, vorzugsweise Verlöten, fest gehalten ist.

7. Abgasheizanordnung nach Anspruch , 5 oder 6, **dadurch gekennzeichnet, dass** der freiliegende Endabschnitt (36) des Heizleiterelement-Leiterelements (28) in der Heizleiterelement-Aufnahmeöffnung (50) durch durch Einpressen des freiliegenden Endabschnitts (36) des Heizleiterelement-Leiterelements (28) in die Heizleiterelement-Aufnahmeöffnung (50) erzeugten Kraftschluss oder/und durch durch Umformen des Verbindungselements (34) im Bereich der Heizleiterelement-Aufnahmeöffnung (50) erzeugten Kraftschluss oder/und Formschluss fest gehalten ist.

8. Abgasheizanordnung nach einem der Ansprüche 4-7, **dadurch gekennzeichnet, dass** der freiliegende Endabschnitt (36) des Heizleiterelement-Leiterelements (28) in der Heizleiterelement-Aufnahmeöffnung (50) durch Materialschluss, vorzugsweise Verlöten, fest gehalten ist.

9. Abgasheizanordnung nach einem der Ansprüche 4-8, **dadurch gekennzeichnet, dass** das Verbindungselement (34) wenigstens im Bereich der Heizleiterelement-Aufnahmeöffnung (50) geschlitzt ausgebildet ist.

10. Abgasheizanordnung nach einem der Ansprüche 4-8, **dadurch gekennzeichnet, dass** das Verbindungselement (34) rohrartig ausgebildet ist und zwei voneinander durch einen vorzugsweise durch Umformen des Verbindungselements (34) gebildeten Einschiebeanschlag (57) getrennte Leiterelement-Aufnahmeabschnitte (48, 52) aufweist, wobei einer der Leiterelement-Aufnahmeabschnitte (48, 52) die Heizleiterelement-Aufnahmeöffnung (50) bereitstellt und der andere der Leiterelement-Aufnahmeabschnitte (48, 52) die Anschlussleitung-Aufnahmeöffnung (54) bereitstellt.

11. Abgasheizanordnung nach einem der Ansprüche 1-10, **dadurch gekennzeichnet, dass** im zweiten Hülsenendabschnitt (58) der Abschirmhülse (44) wenigstens ein die Anschlussleitung (14) umgebendes und von der Abschirmhülse (44) umgebenes Dichtungselement (62) vorgesehen ist.

12. Abgasheizanordnung nach Anspruch 11, **dadurch gekennzeichnet, dass** das wenigstens eine Dichtungselement (62) durch Umformen der Abschirmhülse (44) im zweiten Hülsenendabschnitt (58) zwischen der Abschirmhülse (44) und der Anschlussleitung gepresst gehalten ist.

13. Abgasheizanordnung nach Anspruch 11 oder 12, **dadurch gekennzeichnet, dass** das wenigstens eine Dichtungselement (62) ringartig ausgebildet ist.

14. Abgasheizanordnung nach Anspruch 11, 12 oder 13, **dadurch gekennzeichnet, dass** das wenigstens eine Dichtungselement (62) mit elastischem Material, vorzugsweise Gummimaterial, aufgebaut ist.

15. Abgasanlage für eine Brennkraftmaschine, umfassend eine Abgasheizanordnung nach einem der Ansprüche 1-14.

## Claims

1. Exhaust gas heating arrangement for an exhaust gas system of an internal combustion engine, comprising a heating conductor element (12) around which the exhaust gas (A) can flow in an exhaust gas guide volume (16), wherein the heating conductor element (12) is guided through a wall (20) delimiting the exhaust gas guide volume (16) in the region of at least one sleeve (18) and is connected to an electrical connection line (14) outside the exhaust gas guide volume (16) by means of a connecting arrangement (10) in at least one heating conductor element connecting end region (30), wherein the heating conductor element (12) has an exposed end portion (36) of a heating conductor element conductor element (28) in a heating conductor element connection end region (30) electrically connected to the electrical connection line (14) and the electrical connection line (14) has an exposed end portion (38) of a connection line conductor element (40) in a connection line connecting end region (32) electrically connected to the heating conductor element (12), wherein the connection arrangement for electrically connecting the heating conductor element (12) to the electrical connection line (14) comprises:
- a connection element (34) electrically connected to the exposed end portion (36) of the heating conductor element conductor element (28) and to the exposed end portion (38) of the connection line conductor element (40),
- a shielding sleeve (44) surrounding the connection line connecting end region (32), the heating conductor element connecting end region (30) and the connection element (34) connecting the exposed end portion (36) of the heating conductor element conductor element (28) to the exposed end portion (38) of the connection line conductor element (40), wherein the shielding sleeve (44) is connected to the heating conductor element (12) in the heating conductor element connecting end region (30) in a first sleeve end portion (56) and is connected to the connection line (14) in the connection line connection end region (32) in a second sleeve end portion (58) and shields the exposed end portion (36) of the heating conductor element conductor element (28), the exposed end portion (38) of the connection line conductor element (40) and the connection element (34) connecting the exposed end portion (36) of the heating conductor element conductor element (28) to the exposed end portion (36) of the connection line conductor element (40) against external influences,
**characterized in that** the heating conductor element (12) has, at least in its region guided through the wall (20) by means of the sleeve (18), a sheath (22) made of metallic material, **in that**, in the region of the heating conductor element (12) which is guided through the wall (20) by means of the sleeve (18), the heating conductor element conductor element (28) is provided in the sheath (22) with an intermediate storage of electrically insulating material (24), and that the shielding sleeve (44) is connected in the first sleeve end portion (56) to the sheath (22) of the heating conductor element (12) surrounding the heating conductor element (20) in the heating conductor element connecting end region (30) by material cohesion.

2. Exhaust gas heating arrangement according to claim 1, **characterized in that** the the heating conductor element conductor element (28) is provided as a solid conductor body at least in its exposed end portion (36).

3. Exhaust gas heating arrangement according to claim 1 or 2, **characterized in that** the connection line conductor element (40) is provided with a plurality of individual wires (46) at least in its exposed end portion (38).

4. Exhaust gas heating arrangement as claimed in claim 1, 2 or 3, **characterized in that** the connection element (34) has a heating conductor element receiving opening (50) receiving the exposed end portion (36) of the heating conductor element conductor element (28) or/and a connection line receiving opening (54) receiving the exposed end portion (38) of the connection line conductor element (40).

5. Exhaust gas heating arrangement as claimed in claim 4, **characterized in that** the exposed end portion (38) of the connection line conductor element (40) is fixedly held in the connection line receiving opening (54) by non-positive locking or/and positive locking produced by deforming the connection element (36) in the region of the connection line receiving opening (54).

6. Exhaust gas heating arrangement as claimed in claim 4 or 5, **characterized in that** the exposed end portion (38) of the connection line conductor element (40) is fixedly held in the connection line receiving opening (54) by material cohesion, preferably soldering.

7. Exhaust gas heating arrangement as claimed in claim 5 or 6, **characterized in that** the exposed end portion (36) of the heating conductor element conductor element (28) is fixedly held in the heating conductor element receiving opening (50) by non-positive locking produced by pressing the exposed end portion (36) of the heating conductor element conductor element (28) into the heating conductor element receiving opening (50) or/and by non-positive locking or/and positive locking produced by deforming the connection element (34) in the region of the heating conductor element receiving opening (50).

8. Exhaust gas heating arrangement as claimed in claim 4-7, **characterized in that** the exposed end portion (36) of the heating conductor element conductor element (28) is fixedly held in the heating conductor element receiving opening (50) by material cohesion, preferably soldering.

9. Exhaust gas heating arrangement as claimed in one of claims 4-8, **characterized in that** the connection element (34) is of slotted design at least in the region of the heating conductor element receiving opening (50).

10. Exhaust gas heating arrangement as claimed in one of claims 4-8, **characterized in that** the connection element (34) is of tubular design and has two conductor element receiving portions (48, 52) separated from one another by a push-in stop (57) formed preferably by deforming the connection element (34), wherein one of the conductor element receiving portions (48, 52) provides the heating conductor element receiving opening (50) and the other of the conductor element receiving portions (48, 52) provides the connection line receiving opening (54).

11. Exhaust gas heating arrangement as claimed in one of claims 1-10, **characterized in that** at least one sealing element (62) surrounding the electrical connection line (14) and being surrounded by the shielding sleeve (44) is provided in the second sleeve end portion (58) of the shielding sleeve (44).

12. Exhaust gas heating arrangement as claimed in claim 11, **characterized in that** the at least one sealing element (62) is held in a manner pressed between the shielding sleeve (44) and the connection line by deforming the shielding sleeve (44) in the second sleeve end portion (58).

13. Exhaust gas heating arrangement as claimed in claim 11 or 12, **characterized in that** the at least one sealing element (62) is of annular design.

14. Exhaust gas heating arrangement as claimed in claim 11, 12 or 13, **characterized in that** the at least one sealing element (62) is constructed using elastic material, preferably rubber material.

15. Exhaust gas system for an internal combustion engine, comprising an exhaust gas heating arrangement according to one of claims 1-14.

## Revendications

1. Dispositif de chauffage des gaz d'échappement pour un système de gaz d'échappement d'un moteur à combustion interne, comprenant un élément conducteur chauffant (12) autour duquel peut s'écouler le gaz d'échappement (A) dans un volume de guidage des gaz d'échappement (16), dans lequel l'élément conducteur chauffant (12) est guidé à travers une paroi (20) délimitant le volume de guidage des gaz d'échappement (16) dans la région d'au moins un passage (18) et est connecté à une ligne de connexion électrique (14) à l'extérieur du volume de guidage des gaz d'échappement (16) au moyen d'un dispositif de connexion (10) dans au moins une zone d'extrémité de connexion d'élément conducteur chauffant (30),
dans lequel l'élément conducteur chauffant (12) présente une partie d'extrémité exposée (36) d'un élément conducteur d'élément conducteur chauffant (28) dans une zone d'extrémité de connexion d'élément conducteur chauffant (30) électriquement connectée à la ligne de connexion électrique (14) et la ligne de connexion électrique (14) présente une partie d'extrémité exposée (38) d'un élément conducteur de ligne de connexion (40) dans une zone d'extrémité de connexion de ligne de connexion (32) électriquement connectée à l'élément conducteur chauffant (12), dans lequel l'arrangement de connexion pour la connexion électrique de l'élément conducteur chauffant (12) à la ligne de connexion électrique (14) comprend :
- un élément de connexion (34) connecté électriquement à la partie d'extrémité exposée (36) de l'élément conducteur d'élément conducteur chauffant (28) et à la partie d'extrémité exposée (38) de l'élément conducteur de ligne de connexion (40),
- un manchon de blindage (44) entourant la zone d'extrémité de connexion de ligne de connexion (32), la zone d'extrémité de connexion d'élément conducteur chauffant (30) et l'élément de connexion (34) reliant la partie d'extrémité exposée (36) de l'élément conducteur d'élément conducteur chauffant (28) à la partie d'extrémité exposée (38) de l'élément conducteur de la ligne de connexion (40), dans lequel le manchon de blindage (44) est connecté à l'élément conducteur chauffant (12) dans la zone d'extrémité de connexion d'élément conducteur chauffant (30) dans une première partie d'extrémité de manchon (56) et est connecté à la ligne de connexion électrique (14) dans la zone d'extrémité de connexion de ligne de connexion (32) dans une deuxième partie d'extrémité de manchon (58) et protège la partie d'extrémité exposée (36) de l'élément conducteur de l'élément conducteur d'élément conducteur chauffant (28), la partie d'extrémité exposée (38) de l'élément conducteur de ligne de connexion (40) et l'élément de connexion (34) connectant la partie d'extrémité exposée (36) de l'élément conducteur d'élément chauffant (28) à la partie d'extrémité exposée (36) de l'élément conducteur de la ligne de connexion (40) contre les influences extérieures,
**caractérisé en ce que** l'élément conducteur chauffant (12) a, au moins dans sa zone guidée à travers la paroi (20) au moyen du passage (18), une gaine (22) construite en matériau métallique, **en ce que** dans la zone de l'élément conducteur chauffant (12) guidée à travers la paroi (20) au moyen du passage (18), l'élément conducteur d'élément conducteur chauffant (28) est pourvu d'un stockage intermédiaire de matériau isolant électrique (24) dans la gaine (22), et que le manchon de blindage (44) est connecté dans la première partie d'extrémité de manchon (56) à la gaine (22) de l'élément conducteur chauffant (12) entourant l'élément conducteur chauffant (20) dans la zone d'extrémité de connexion d'élément conducteur chauffant (30) par une fermeture cohésion de matériaux.

2. Dispositif chauffant des gaz d'échappement selon la revendication 1, **caractérisé en ce que** l'élément conducteur d'élément conducteur chauffant (28) est fourni comme un corps conducteur solide au moins dans sa partie d'extrémité exposée (36).

3. Dispositif chauffant des gaz d'échappement selon la revendication 1 ou 2, **caractérisé en ce que** l'élément conducteur de la ligne de connexion (40) est pourvu d'une pluralité de fils individuels (46) au moins dans sa partie d'extrémité exposée (38).

4. Dispositif chauffant des gaz d'échappement selon la revendication 1, 2 ou 3, **caractérisé en ce que** l'élément de connexion (34) possède une ouverture de réception de l'élément conducteur chauffant (50) recevant la partie d'extrémité exposée (36) de l'élément conducteur d'élément conducteur chauffant (28) ou/et une ouverture de réception de la ligne de connexion (54) recevant la partie d'extrémité exposée (38) de l'élément conducteur de la ligne de connexion (40).

5. Dispositif chauffant des gaz d'échappement selon la revendication 4, **caractérisé en ce que** la partie d'extrémité exposée (38) de l'élément conducteur de la ligne de connexion (40) est maintenue de manière fixe dans l'ouverture de réception de la ligne de connexion (54) par un verrouillage non positif ou/et un verrouillage positif produit par la déformation de l'élément de connexion (36) dans la région de l'ouverture de réception de la ligne de connexion (54).

6. Dispositif chauffant des gaz d'échappement selon la revendication 4 ou 5, **caractérisé en ce que** la partie d'extrémité exposée (38) de l'élément conducteur de la ligne de connexion (40) est maintenue de manière fixe dans l'ouverture de réception de la ligne de connexion (54) par cohésion des matériaux, de préférence par soudage.

7. Dispositif chauffant des gaz d'échappement selon la revendication 5 ou 6, **caractérisé en ce que** la partie d'extrémité exposée (36) de l'élément conducteur d'élément conducteur chauffant (28) est maintenue de manière fixe dans l'ouverture de réception de l'élément conducteur chauffant (50) par un verrouillage non positif produit en pressant la partie d'extrémité exposée (36) de l'élément conducteur d'élément conducteur chauffant (28) dans l'ouverture de réception de l'élément conducteur chauffant (50) ou/et par un verrouillage non positif ou/et un verrouillage positif produit en déformant l'élément de connexion (34) dans la région de l'ouverture de réception de l'élément conducteur chauffant (50).

8. Dispositif chauffant des gaz d'échappement selon les revendications 4 à 7, **caractérisé en ce que** la partie d'extrémité exposée (36) de l'élément conducteur d'élément conducteur chauffant (28) est maintenue de manière fixe dans l'ouverture de réception de l'élément conducteur chauffant (50) par cohésion des matériaux, de préférence par soudage.

9. Dispositif chauffant des gaz d'échappement selon l'une des revendications 4 à 8, **caractérisé en ce que** l'élément de connexion (34) est de type fendu au moins dans la zone de l'ouverture de réception de l'élément conducteur chauffant (50).

10. Dispositif chauffant des gaz d'échappement selon l'une des revendications 4 à 8, **caractérisé en ce que** l'élément de connexion (34) est de conception tubulaire et comporte deux parties de réception d'élément conducteur (48, 52) séparées l'une de l'autre par une butée d'insertion (57) formée de préférence par déformation de l'élément de connexion (34), dans lequel l'une des parties de réception d'élément conducteur (48, 52) fournit l'ouverture de réception d'élément conducteur chauffant (50) et l'autre des parties de réception d'élément conducteur (48, 52) fournit l'ouverture de réception de la ligne de de connexion (54).

11. Dispositif de connexion selon l'une des revendications 1 à 10, **caractérisé en ce qu'**au moins un élément d'étanchéité (62) entourant la ligne de connexion électrique (14) et entouré par le manchon de blindage (44) est prévu dans la deuxième partie d'extrémité de manchon (58) du manchon de blindage (44).

12. Dispositif de connexion selon la revendication 11, **caractérisé en ce que** ledit au moins un élément d'étanchéité (62) est maintenu de manière comprimée entre le manchon de blindage (44) et la ligne de connexion par déformation du manchon de blindage (44) dans la deuxième partie d'extrémité du manchon (58).

13. Dispositif de connexion selon la revendication 11 ou 12, **caractérisé en ce que** ledit au moins un élément d'étanchéité (62) est de forme annulaire.

14. Dispositif de connexion selon la revendication 11, 12 ou 13, **caractérisé en ce que** ledit au moins un élément d'étanchéité (62) est construit en matériau élastique, de préférence en caoutchouc.

15. Système de gaz d'échappement pour un moteur à combustion interne, comprenant un dispositif chauffant des gaz d'échappement selon la revendication 1-14.
